(19) Europäisches Patentamt
European Patent Office
Office européen des brevets

(11) **EP 0 867 379 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(51) Int Cl.⁷: **B65D 65/40**, B65D 30/08, B65D 85/36

(21) Anmeldenummer: **98104632.9**

(22) Anmeldetag: **14.03.1998**

(54) **Tüte für Lebensmittel**

Bag for foodstuff

Sachet pour denrées alimentaires

(84) Benannte Vertragsstaaten:
**AT BE CH DK ES FI FR GB IE IT LI NL PT SE**

(30) Priorität: **23.03.1997 DE 19712052**

(43) Veröffentlichungstag der Anmeldung:
**30.09.1998 Patentblatt 1998/40**

(73) Patentinhaber: **BMS Papier Concept GmbH 65191 Wiesbaden (DE)**

(72) Erfinder: **BMS Papier Concept GmbH 65191 Wiesbaden (DE)**

(74) Vertreter: **KEIL & SCHAAFHAUSEN Patentanwälte, Cronstettenstrasse 66 60322 Frankfurt am Main (DE)**

(56) Entgegenhaltungen:
WO-A-93/22207       DE-A- 2 501 022
DE-A- 4 129 426      US-A- 4 861 957

**Beschreibung**

Die vorliegende Erfindung betrifft eine Tüte zum Umhüllen von Lebensmitteln, insbesondere von Brot und dergleichen Backwaren.

Lebensmittelverpackungen haben grundsätzlich die Aufgabe, das Produkt vor Austrocknen und Aromaverlust sowie vor schädlichen äußeren Einflüssen zu schützen. Außerdem müssen sie gesundheitlich unbedenklich sein. In Bezug auf die Haltbarkeit und Frische von Backwaren, wie Brot, kommt es einerseits darauf an, daß die Backwaren nicht austrocknnen und andererseits, daß z. B. die Kruste des Brotes trotzdem knusprig bleibt.

Frisches Brot und dergleichen Backwaren werden in Bäckereien üblicherweise in Bögen aus Papier eingepackt oder in Tüten aus Papier oder Kunststoff oder einem Verbundmaterial daraus verpackt.

Bei herkömmlich eingesetzten Verpackungsmaterialien ist es bislang nicht möglich, die Frische eines Brotes über länger als zwei Tage zu halten. So ist bei Umhüllungen aus Papier die Schnittkante des angeschnittenen Brotes spätestens nach zwei Tagen trocken und hart. Bei Kunststoffumhüllungen hingegen wird zwar die Feuchtigkeit des Brotes gehalten, jedoch nimmt die Kruste die Feuchtigkeit auf und wird dadurch weich und gummiartig. Geht man davon aus, daß ein Brot durchschnittlich innerhalb von vier Tagen verzehrt wird, ist somit die zweite Hälfte des Brotes regelmäßig "alt".

Eine weitere Anforderung an eine Verpackung für Backwaren, wie Brot, insbesondere beim Einsatz in Bäckereien, ist die leichte Handhabbarkeit. Die Backwaren sollen zügig ohne großen Aufwand eingepackt werden können, damit der Kunde so effizient wie möglich bedient werden kann.

Auch kann die Anforderung bestehen, die Backwaren, insbesondere Brot, direkt nach dem Entnehmen aus dem Ofen noch backwarm zu verpacken. Herkömmlich eingesetzte Verpackungsmaterialien, insbesondere aus Kunststoff, sind hierfür nicht einsetzbar, da es sehr schnell schimmelig wird, wenn es warm eingepackt wird.

Die DE 295 12 736 U 1 betrifft eine aus einem mehrschichtigen Verbundmaterial hergestellte Verpackung in Form eines Beutels, einer Schachtel oder dergleichen, insbesondere zum Verpacken von fetthaltigen Waren, wobei das mehrschichtige Verbundmaterial eine dem Innenraum der Verpackung zugewandte Schicht aus saugfähigem Papier und eine Schicht aus einer wasserundurchlässigen Kunststoffolie aufweist. Die Kunststoffolie kann Polyäthylen, das Papier Filterpapier sein. Hiermit soll eine Verpackung vorgeschlagen werden, welche auch längerfristig zur Aufbewahrung fetthaltiger Waren geeignet ist.

Aus der DE-GM 19 85 257 ist ein Sack, Beutel oder dergleichen mit einer aus mehrerer Lagen bestehenden Wandung bekannt, von welcher die äußere Lage aus Kunststoffolie und mindestens eine innere Lage aus Papier besteht, wobei die außen liegende Kunststofflage mit der an sie angrenzenden Papierinnenlage vor der Sackbildung mittels Klebstoff zu einer Wandungseinheit verbunden ist. Hierdurch soll ein Sack oder Beutel vorgeschlagen werden, welcher zum Einen auf herkömmlichen Papierverarbeitungs- bzw. Beutel- oder Sackmaschinen herstellbar ist und zum Anderen eine verbesserte Isolierung des Beutelinhalts gegen Temperaturschwankungen bei gleichzeitig erhöhter Widerstandsfähigkeit bei Warmgutbefüllung aufweist.

Weiter ist in der DE 41 29 426 A1 eine Verpackung offenbart, die aus einem zellulosehaltigen Haushaltspapier besteht, das als Kaschiermaterial auf Papier oder Kunststoff aufgebracht wird. Das Haushaltspapier besitzt dabei die Fähigkeit, den Feuchtigkeitshaushalt des Packungsinhalts zu regulieren.

Aus der CH 659 046 A5 ist ein Verpackungsbeutel, insbesondere für brotartige Backwaren, mit zwei von seiner Öffnung zu seinem Boden verlaufenden, miteinander zum Beutel verbundenen, sich gegenüberliegenden Wänden bekannt, von denen wenigstens die eine aus drei nebeneinander angeordneten, von der Beutelöffnung zum Boden verlaufenden, miteinander verbundenen Paaren zusammengesetzt ist, wobei die beiden seitlichen Bahnen aus wasserdampfdurchlässigem, höchstens durchscheinendem Papier gebildet sind, während die mittlere Bahn aus einer durchsichtigen Kunststoffolie besteht, wobei die Kunststoffolienbahn eine Perforation aufweist. Die Kunststoffolienbahn kann eine, vorzugsweise klare, Polypropylenfolie sein. Hierdurch soll ein wirtschaftlich herstellbarer und verwendbarer Verpackungsbeutel geschaffen werden, welcher gleichermaßen den Bedürfnissen des Kunden (Warenkontrolle durch Sichtkontakt und durch Griff) unter Wahrung der hygienischen Anforderungen, als auch den Bedürfnissen des Herstellers und Verkäufers (ausreichendes Atmungsvermögen und Verkaufsappeal) zu genügen vermag.

Aus der WO 93/22207 ist ein Packungsbeutel aus einer perforierten Kunststoffolie für die Aufnahem von Lebensmitteln, wie Gemüse und Früchte, bekannt, welche eine lokale Kondensation in dem Beutel bewirkt, so daß Gewichtsverluste auf ein Minimum zurückgeführt werden. Ein ähnlicher Verpackungsbeutel für Brotgebäck ist aus der DE-A-25 01 022 bekannt, der aus einer reinen mit Spalten versehenen Kunststoffolie gebildet ist.

Aufgabe der Erfindung ist es, eine leicht handhabbare Lebensmittelverpackung zu schaffen, die eine ausreichend lange Haltbarkeit und Frische eines Lebensmittels, insbesondere von Backwaren, wie Brot, gewährleistet.

Gelöst wird diese Aufgabe mit einer Tüte, insbesondere zum Einhüllen von Lebensmitteln, aus einem Verbundmaterial mit mindestens einer ersten Schicht aus einem zellstoffhaltigen Material und einer zweiten Schicht aus Kunststoff, wobei die erste Schicht ein spezifisches Gewicht von 15 bis 40g/m$^2$ und die zweite Schicht eine Dicke von 6 bis 20 µm aufweisen, wobei das Verbundmaterial perforiert ist und wobei das Verhältnis von offener zu geschlossener Fläche des Verbundmaterials zwischen 1/50 und 1/250 liegt.

Neben einer leichten Handhabbarkeit ist ein besonderer Vorteil dieser erfindungsgemäßen Tüte, daß sie durch die Perforation des Verbundwerkstoffs atmungsaktiv ist. Dadurch wird ein Austausch von Feuchte zwischen dem Tüteninneren und der Umgebung möglich. Auf der einen Seite kann so viel Feuchte aus der Tüte entweichen, daß z. B. die Kruste von Brot die vom Inneren des Brotes aufgenommene Feuchte abgeben kann. Gleichzeitig entweicht aber nur so wenig Feuchte, daß ein angeschnittenes Brot selbst nach Ablauf von vier Tagen noch eine ausreichende Feuchte besitzt, so daß es für den Verbraucher immer noch schmackhaft ist.

Über das Verhältnis von offener Fläche zur Gesamtfläche des Verbundmaterials, d.h. durch die Wahl von Lochgröße und Anzahl der Löcher pro Fläche, kann der Feuchteaustausch zwischen Tüteninnerem und der Umgebung festgelegt werden. So ist bei einem kleinen Verhältnis von offener Fläche zur Gesamtfläche des Verbundmaterials der Feuchteübergang von dem Tüteninneren zur Umgebung gering, während bei größerem Verhältnis der Feuchteübergang größer ist. Dadurch kann die erfundene Tüte z. B. an verschiedene Brottypen - Brot mit harter oder weicher Kruste, saftigeres oder härteres Brot - in seinen Eigenschaften optimal angepaßt werden. Auch kann die Tüte bei entsprechend gewähltem Verhältnis von offener Fläche zur Gesamtfläche des Verbundmaterials zum Verpacken von noch ofenwarmen Backwaren, wie Brot, oder aber zum Verpacken der bereits erkalteten Backwaren im Verkauf eingesetzt werden.

Durch die Kombination einer zellstoffhaltigen Schicht mit einer Kunststoffschicht wird neben einer kontrollierten Abgabe von Feuchtigkeit ein Lichtschutz bewirkt. Auch fühlt sich die zellstoffhaltige Schicht, sofern sie außen liegt, angenehmer an als eine Kunststoffschicht, und sie ist leicht bedruckbar.

Ferner ist das Verbundmaterial ausreichend reißfest und trotzdem in seiner Masse auf ein Minimum reduziert, so daß der anfallende Verpackungsmüll sehr gering ist, wenn die Tüte nicht mehr verwendet werden soll.

Diese Vorteile der erfindungsgemäßen Tüte lassen sich nicht nur zum Frischhalten von Backwaren, wie Brot, sondern auch von anderen Lebensmitteln, wie beispielsweise Aufschnitt, Fleisch oder Fisch nutzen.

Die erste Schicht des Verbundmaterials ist bevorzugt aus Papier oder Zellulose gebildet.

Der Kunststoff der zweiten Schicht besteht vorzugsweise aus einem Polyethylen, wobei sich insbesondere ein LDPE (Low-Density-Polyethylen) mit einer Dichte von 0,915 - 0,925 g/cm$^3$ oder ein LLDPE (Linear-Low-Density-Polyethylen) mit einer Dichte von 0,92 -

0,935 g/cm$^3$ eignet. Bei der Auswahl ist wesentlich die Reißfestigkeit und auch die Hitzebeständigkeit von Bedeutung.

So sollte die Kunststoffschicht insbesondere bei Tüten für backwarm zu verpackende Brote oder dergleichen bis mindestens 120° C temperaturbeständig sein, damit das Brot oder dergleichen möglichst frühzeitig nach Herausnehmen aus dem Ofen eingepackt werden kann.

In besonderer Ausgestaltung sind die erste und zweite Schicht lösbar miteinander verbunden, so daß das Verbundmaterial weitestgehend in seine Komponenten zerlegt werden kann. Hieraus ergeben sich insbesondere Vorteile beim Recycling. Die Schichten des Verbundmaterials können jedoch auch fest miteinander verbunden sein beispielsweise in der Form, daß die Kunststoffschicht auf die zellstoffhaltige Schicht aufgedampft ist.

Vorzugsweise bildet die zweite Schicht die Innenseite der Tüte.

Die Tüte kann in ihrer Längsausrichtung mindestens eine Naht aufweisen. Die Naht kann durch Versiegeln, Verschweißen oder Verkleben der ersten und/ oder zweiten Schicht gebildet sein. Zum Beispiel durch das Verschweißen oder Versiegeln der aneinander liegenden Kunststoffschichten wird an der Stelle der Naht auch die darüber liegende erste Schicht aus dem zellstoffhaltigen Material mit der zweiten Schicht verbunden. Somit wird selbst bei ansonsten voneinander lösbaren Schichten die Stabilität und Festigkeit der Tüte gewährleistet.

Das übereinander liegende Verbundmaterial an der Bodenseite der Tüte ist bevorzugt mit einer Doppelfalz ineinander eingeschlagen. Die durch das Falzen aufeinander liegenden ersten Schichten des Verbundmaterials können dann miteinander verklebt werden, so daß auch hier ein fester Verbund gerade bei einem ansonsten voneinander lösbaren Verbundmaterial möglich ist.

Es hat sich gezeigt, daß die Perforation vorzugsweise aus Löchern mit einem mittleren Durchmesser von 0,3 mm - 1,5 mm, vorzugsweise 1 mm, gebildet ist. Bei dieser Lochgröße ist ein wirksamer Schutz des Lebensmittels vor Lichteinflüssen und Verschmutzung bei gleichzeitigem Feuchteaustausch gewähr leistet.

Der Gegenstand der Erfindung wird nachfolgend anhand eines bevorzugten Ausführungsbeispiel näher erläutert.

Bei diesem Ausführungsbeispiel besteht die Tüte aus einem Verbundmaterial aus einer äußeren, leicht bedruckbaren Schicht aus Zellulose mit einer Dichte von ca. 20 g/m$^2$ sowie einer inneren, 8 µm starken Schicht aus LDPE, welches das Ausdringen von Feuchtigkeit, Fett und dgl. behindert.

Bei der Herstellung eines solchen Verbundmaterials wird z. B. die LDPE-Schicht direkt aus einem Blasfolienextruder auf die Zelluloseschicht aufgebracht und durch punktuelles Andrücken der extrudierten LDPE-Schicht an die Zelluloseschicht während der Beschichtung angeheftet.

Die Tüte besteht aus einem mehrfach gefalteten rechteckigen Bogen des Verbundmaterials, der in Längsrichtung mehrfach gefaltet ist, so daß die LDPE-Schicht die innere Schicht der Tüte bildet. Die innenliegende LDPE-Schicht ist an den aneinander anliegenden freien Enden des Bogens in Längsrichtung thermisch versiegelt, so daß die Tüte in Längsrichtung eine Naht aufweist. Durch die Versiegelung ist die Zellulose-Schicht im Bereich der Naht mit der darunter befindlichen LDPE-Schicht fest verbunden. Es ist aber auch ein Verkleben möglich.

Das übereinander liegende Verbundmaterial an der Bodenseite der Tüte ist mit einer Doppelfalz ineinander eingeschlagen und die durch das Falzen aufeinander liegenden Außenseiten des Verbundmaterials sind beispielsweise miteinander verklebt.

Die Tüte weist z. B. eine regelmäßige Perforation auf, die durch in verschiedenen parallelen Reihen angeordnete Löcher mit einem Durchmesser von ca. 1 mm und einem Abstand von ca. 15 mm gebildet ist, wobei die Reihen einen Abstand von ca. 15 mm zueinander haben. Das Verhältnis von offener zu gesamter Fläche ergibt sicher aus

$$n * \pi * (D/2)^2/A$$

(N = Anzahl der Löcher; d = gemittelter Durchmesser der Löcher; A = Bezugsfläche ) zu

$$2 * \pi * (1 \text{ mm}/2^2/(15 \text{ mm})^2 = \pi/450 = 1/150.$$

Die Perforation wird mit einer Nadelwalze entweder auf das Verbundmaterial vor seiner Verarbeitung zur Tüte aufgebracht, oder es wird direkt die aus dem Verbundmaterial gefertigte Tüte gewalzt.

**Patentansprüche**

1.  Tüte, insbesondere zum Einhüllen von Lebensmitteln, aus einem Verbundmaterial mit mindestens einer ersten Schicht aus einem zellstoffhaltigen Material und einer zweiten Schicht aus Kunststoff, **dadurch gekennzeichnet, daß** die erste Schicht ein spezifisches Gewicht von 15 bis 40 $g/m^2$ und die zweite Schicht eine Dicke von 6 bis 20 μm aufweisen, daß das Verbundmaterial perforiert ist und daß das Verhältnis von offener Fläche zur Gesamtfläche des Verbundmaterials zwischen 1/50 und 1/250 liegt.

2.  Tüte nach Anspruch 1, **dadurch gekennzeichnet, daß** die erste Schicht aus Papier oder Zellulose gebildet ist.

3.  Tüte nach Anspruch 1 oder 2, **dadurch gekennzeichnet, daß** die zweite Schicht aus einem Polyethylen, insbesondere einem LDPE (Low-Density-Polyethylen) mit einer Dichte von 0,915 - 0,925 g/$cm^3$ oder einem LLDPE (Linear-Low-Density-Polyethylen) mit einer Dichte von 0,92 - 0,935 g/$cm^3$, gebildet ist.

4.  Tüte nach einem der Ansprüche 1 bis 3, **dadurch gekennzeichnet, daß** die verwendete zweite Schicht bis mindestens 120° C temperaturbeständig ist.

5.  Tüte nach einem der Ansprüche 1 bis 4, **dadurch gekennzeichnet, daß** die erste und zweite Schicht lösbar miteinander verbunden sind.

6.  Tüte nach einem der Ansprüche 1 bis 5, **dadurch gekennzeichnet, daß** die zweite Schicht die Innenseite der Tüte bildet.

7.  Tüte nach einem der Ansprüche 1 bis 6, **dadurch gekennzeichnet, daß** die Tüte in ihrer Längsausrichtung mindestens eine Naht aufweist.

8.  Tüte nach Anspruch 7, **dadurch gekennzeichnet, daß** die wenigstens eine Naht durch Versiegeln, Verschweißen oder Verkleben der ersten und/oder der zweiten Schicht gebildet ist.

9.  Tüte nach einem der Ansprüche 1 bis 8, **dadurch gekennzeichnet, daß** das übereinander liegende Verbundmaterial an der Bodenseite mit einem Doppelfalz ineinander eingeschlagen ist und die durch das Falzen aufeinander liegenden Schichten des Verbundmaterials miteinander verklebt sind.

10. Tüte nach einem der Ansprüche 1 bis 9, **dadurch gekennzeichnet, daß** die Perforation aus Löchern mit einem mittleren Durchmesser von 0,3 mm - 1,5 mm, vorzugsweise 1 mm, gebildet ist.

**Claims**

1.  Bag, in particular for wrapping food, made of a composite material including at least one first layer of a cellulose-containing material and a second layer of plastic, **characterized in that** the first layer has a specific weight of from 15 to 40 $g/m^2$ and the second layer has a thickness of from 6 to 20 μm, that the composite material is perforated and that the ratio of the open area to the overall area of the composite material is from 1/50 to 1/250.

2.  Bag according to claim 1, **characterized in that** the first layer is comprised of paper or cellulose.

**3.** Bag according to claim 1 or 2, **characterized in that** the second layer is formed of a polyethylene, in particular a LDPE (low density polyethylene) having a density of from 0.915 to 0.925 g/cm$^3$ or a LLDPE (linear low density polyethylene) having a density of from 0.92 to 0.935 g/cm$^3$.

**4.** Bag according to one of claims 1 to 3, **characterized in that** the used second layer is temperature-resistant of at least up to 120° C.

**5.** Bag according to one of claims 1 to 4, **characterized in that** the first and the second layer are detachably connected to each other.

**6.** Bag according to one of claims 1 to 5, **characterized in that** the second layer defines the inside of the bag.

**7.** Bag according to one of claims 1 to 6, **characterized in that** the bag in its longitudinal extension comprises at least one seam.

**8.** Bag according to claim 7, **characterized in that** the at leat one seam is formed by sealing, bonding or adhering of the first and/or the second layer.

**9.** Bag according to one of claims 1 to 8, **characterized in that** the super-adjacent composite material is at its bottom side folded over each other to form a double fold and that the layers of the composite material super-adjacent to each other by the folding are adhered to each other.

**10.** Bag according to one of claims 1 to 9, **characterized in that** the perforation is formed of holes having an average diameter of from 0.3 to 1.5 mm, preferably of 1 mm.

**Revendications**

**1.** Sac, en particulier pour envelopper des aliments, composé d'un matériau composite avec au moins une première couche d'une matière contenant de la cellulose et une deuxième couche en matière plastique, **caractérisé en ce que** la première couche présente un poids spécifique de 15 à 40 g/m$^3$ et la deuxième couche présente une épaisseur de 6 à 20 μm, **en ce que** le matériau composite est perforé et **en ce que** le rapport de la surface ouverte par rapport à la surface totale du matériau composite est compris entre 1/50 et 1/250.

**2.** Sac selon la revendication 1, **caractérisé en ce que** la première couche est formée à partir de papier ou de cellulose.

**3.** Sac selon la revendication 1 ou 2, **caractérisé en ce que** la deuxième couche est formé à partir d'un polyéthylène, notamment un LDPE (polyéthylène basse densité) ayant une densité de 0,915 à 0,925 g / cm$^3$ ou un LLDPE (polyéthylène basse densité à structure linéaire) ayant une densité de 0,92 à 0,935 g / cm $^3$.

**4.** Sac selon l'une des revendications 1 à 3, **caractérisé en ce que** la deuxième couche utilisée résiste à un température d'au moins 120 °C.

**5.** Sac selon l'une des revendications 1 à 4, **caractérisé en ce que** la première et deuxième couche sont liées ensemble de façon réversible.

**6.** Sac selon l'une des revendications 1 à 5, **caractérisé en ce que** la deuxième couche forme l'intérieur du sac.

**7.** Sac selon l'une des revendications 1 à 6, **caractérisé en ce que** le sac présente dans son sens longitudinal au moins une soudure.

**8.** Sac selon la revendication 7, **caractérisé en ce que** la soudure au moins est formée en scellant, en soudant ou en collant la première et / ou la deuxième couche.

**9.** Sac selon l'une des revendications 1 à 8, **caractérisé en ce que** le matériau composite mis l'un sur l'autre sur le côté inférieur est replié sur lui-même avec un pli double et les couches du matériau composite se trouvant l'une sur l'autre en raison des plis sont collées ensemble.

**10.** Sac selon l'une des revendications 1 à 9, **caractérisé en ce que** la perforation est formée de trous ayant un diamètre moyen de 0,3 mm à 1,5 mm, de préférence 1 mm.